# EUROPÄISCHE PATENTSCHRIFT

(11) **EP 1 042 137 B1**
(45) Veröffentlichungstag und Bekanntmachung des Hinweises auf die Patenterteilung: **24.08.2005**
(21) Anmeldenummer: 99939908.2
(22) Anmeldetag: 18.06.1999
(51) Int. Cl.: B60K 31/00

(54) **VERFAHREN UND VORRICHTUNG ZUR STEUERUNG DER GESCHWINDIGKEIT EINES FAHRZEUGS**
METHOD AND DEVICE FOR CONTROLLING THE SPEED OF A VEHICLE
PROCEDE ET DISPOSITIF POUR COMMANDER LA VITESSE D'UN VEHICULE

(30) Priorität: 28.07.1998 DE 19833838
(43) Veröffentlichungstag der Anmeldung: 11.10.2000
(73) Patentinhaber: ROBERT BOSCH GMBH, 70442 Stuttgart (DE)
(72) Erfinder: HELLMANN, Manfred, D-71706 Hardthof (DE); WINNER, Hermann, D-76229 Karlsruhe (DE)
(86) Internationale Anmeldenummer: PCT/DE1999/001791
(87) Internationale Veröffentlichungsnummer: WO 2000/006410

(56) Entgegenhaltungen:
- EP-A- 0 649 766
- DE-A- 4 338 399
- DE-A- 4 443 450
- DE-A- 19 622 638
- US-A- 5 393 277
- WINNER ET AL.: "Adaptive Cruise Control System Aspects and Development Trends" SAE 1996 TRANSACTIONS-JOURNAL OF PASSENGER CARS, Bd. 105, Nr. 961010, 1996, Seiten 1412-1421, XP002124577 Warrendale, US in der Anmeldung erwähnt

## Beschreibung

### Stand der Technik

Verfahren und Vorrichtungen zur Steuerung der Geschwindigkeit von Fahrzeugen sind aus dem Stand der Technik in vielfältiger Abwandlung bekannt. Beispielsweise beschreibt das SAE-Paper Nr. 96 10 10 "Adaptive Cruise Control, System Aspects and Development Trends", 1996 von Hermann Winner, Stefan Witte, Werner Uhler und Bernd Lichtenberg eine gattungsgemäße Geschwindigkeitssteuerung unter Berücksichtigung des Abstandes zu vorausfahrenden Fahrzeugen. Dabei gibt der Fahrer über einen Bedienhebel mit dem bei Fahrgeschwindigkeitsreglern üblichen Funktionen Setzen, Wiederaufnahme, Beschleunigen, etc. die Sollgeschwindigkeit des Fahrzeugs vor, die bei nicht vorhandenem Frontfahrzeug vergleichbar zu einem herkömmlichen Fahrgeschwindigkeitsregler eingeregelt wird. Dabei wird aus der Differenz zwischen Sollgeschwindigkeit und Fahrgeschwindigkeit eine Sollbeschleunigung berechnet, die durch Steuerung der Antriebseinheit des Fahrzeugs bereitgestellt wird. Erkennt ein Radarsystem ein vorausfahrendes Fahrzeug, werden der Abstand und die Relativgeschwindigkeit zu diesem Fahrzeug ermittelt. Die Regelaufgabe besteht in diesem Fall darin, die Relativgeschwindigkeit auf Null einzuregeln und dabei gleichzeitig einen geschwindigkeitsabhängigen Sollabstand einzuhalten. Parameter zur Bestimmung des Sollabstandes (Zeitlücke) sind vom Fahrer einstellbar. Dieser Folgeregler bestimmt aus den genannten Größen ebenfalls eine Sollbeschleunigung. Die Sollbeschleunigungswerte können dabei auch negativ sein, so daß sie Verzögerungssollwerten entsprechen. Die vom Folge- und/oder Fahrgeschwindigkeitsregler vorgegebenen Sollwerte werden durch Beeinflussung des Motors des Fahrzeugs und/oder der Bremsen eingestellt.

In der DE-A1 43 38 399 wird ein Fahrgeschwindigkeitsregler beschrieben, der auf der Basis der Differenz zwischen Soll- und Istgeschwindigkeit eine Sollbeschleunigung des Fahrzeugs vorgibt, welche durch Steuerung des Motors und/oder durch Betätigen der Radbremsen des Fahrzeugs eingestellt wird.

Insbesondere bei Fahrzeugen ohne automatisiertem Getriebe muß diese Regelung bei manuellem Gangwechsel unterbrochen werden, da bei derartigen Systemen auch der Kraftfluß zwischen Motor und Antrieb unterbrochen wird. Bei üblichen Fahrgeschwindigkeitsreglern wird daher bei Betätigen der Kupplung der Fahrgeschwindigkeitsregler deaktiviert, so daß der Fahrer nach dem Wiedereinkuppeln durch entsprechende Betätigung der Bedientasten des Fahrgeschwindigkeitsreglers diesen erneut aktivieren muß. Diese Lösung ist sowohl bei üblichen Fahrgeschwindigkeitsreglern als auch beim oben dargestellten adaptiven Fahrgeschwindigkeitsregler wenig zufriedenstellend.

Die EP-A 649 766 zeigt einen Fahrgeschwindigkeitsregler, welcher bei Unterbrechen des Kraftschlusses zwischen Antriebseinheit und Abtrieb abgeschaltet wird und bei Wiederherstellen des Kraftschlusses automatisch wieder aktiviert wird.

Die DE 196 22 638 A zeigt ebenfalls einen Fahrgeschwindigkeitsregler, welcher bei unterbrochenem Kraftschluss, beispielsweise während eines Gangwechsels, abgeschaltet wird bzw. außer Kraft gesetzt wird und bei Wiederherstellen des Kraftschlusses automatisch fortgesetzt wird.

Es ist Aufgabe der Erfindung, Maßnahmen zur Verbesserung der Funktionsweise eines Fahrgeschwindigkeitsreglers bzw. eines adaptiven Fahrgeschwindigkeitsreglers bei Kraftflußunterbrechungen anzugeben.

Dies wird durch die kennzeichnenden Merkmale der unabhängigen Patentansprüche erreicht.

### Vorteile der Erfindung

Durch die nachfolgend beschriebene Lösung wird eine Kraftflußunterbrechung und aktivem Fahrgeschwindigkeitsregler bzw. aktivem adaptiven Fahrgeschwindigkeitsregler zufriedenstellend beherrscht, ohne daß der Fahrer beim Wiederherstellen des Kraftflusses die Reglerfunktion manuell wieder aufnehmen muß.

Besonders vorteilhaft ist, daß der Regler während der Kraftflußunterbrechung nicht abgeschaltet wird, sondern durch Weiterberechnung der entsprechenden Sollwerte zumindest bremsbereit bleibt (brake-only-Regelung).

Von besonderem Vorteil ist, daß während der Kraftflußunterbrechung der zukünftige Gang abgeschätzt wird und die Drehzahl der Antriebseinheit des Fahrzeugs auf die Drehzahl gesteuert wird, die nach dem Wiederherstellen in dem dann voraussichtlich vorliegenden Gang vorliegen wird.

Besonders vorteilhaft ist, daß abhängig von den Last- und Drehzahlwerten vor der Kraftflußunterbrechung der zukünftige Gang abgeschätzt und daraus über die Fahrgeschwindigkeit das Drehzahlniveau des Motors, daß nach dem Wiederherstellen vorliegen würde, prädiziert wird.

Besonders vorteilhaft ist, daß diese Drehzahl während der Kraftflußunterbrechung durch eine Drehzahlregelung geregelt wird, wenn der Regler ein positives Motormoment, d.h. eine Beschleunigung oder einen stationären Betrieb, anfordert.

### Zeichnung

Die Erfindung wird nachstehend anhand der in der Zeichnung dargestellten Ausführungsformen näher erläutert. Dabei zeigt Figur 1 ein Übersichtsschaltbild einer Steuereinheit zur Steuerung der Geschwindigkeit eines Fahrzeugs, die in Figur 2 am Beispiel eines adaptiven Fahrgeschwindigkeitsreglers näher ausgeführt ist. Figur 3 zeigt die erfindungsgemäße Lösung anhand eines Flußdiagramms, welches ein in einem Mikrocomputer der Steuereinheit ablaufendes Programm skizziert. Figur 4 schließlich zeigt Zeitdiagramme, anhand derer eine bevorzugte Realisierung der erfindungsgemäßen Lösung dargestellt ist.

### Beschreibung von Ausführungsbeispielen

Die erfindungsgemäße Lösung wird nachstehend anhand des bevorzugten Anwendungsfalls eines adaptiven Fahrgeschwindigkeitsreglers dargestellt. Sie wird jedoch auch in vorteilhafter Weise im Rahmen der eingangs genannten weiteren Ausführungsformen einer Fahrgeschwindigkeitssteuerung eines Fahrzeugs eingesetzt.

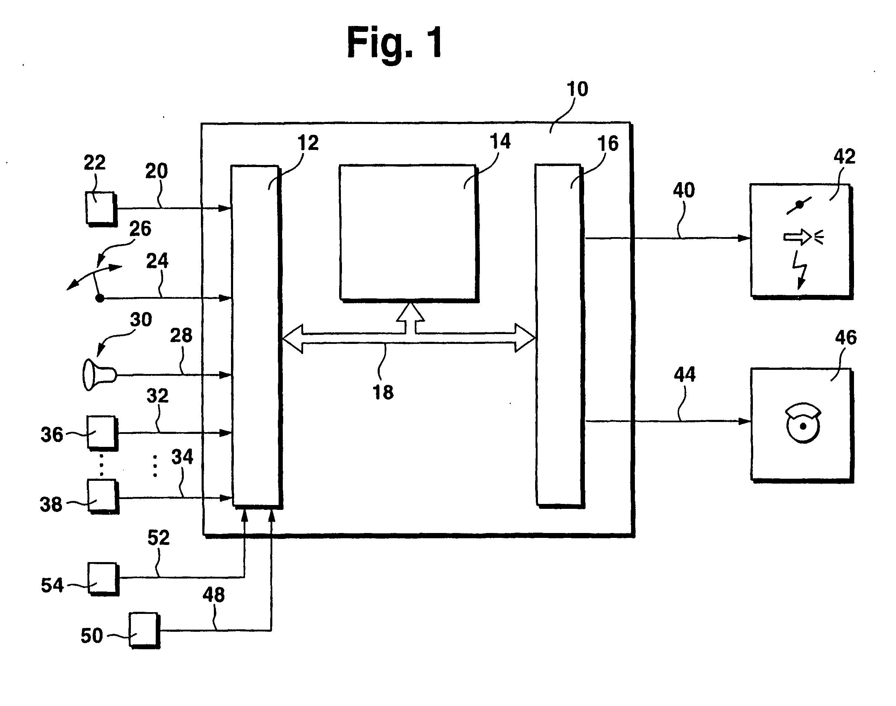

Figur 1 zeigt ein Übersichtsschaltbild einer Steuereinheit 10 für einen adaptiven Fahrgeschwindigkeitsregler. Die Steuereinheit 10 umfaßt dabei eine Eingangsschaltung 12, wenigstens einen Mikrocomputer 14 und einen Ausgangsschaltung 16. Diese Elemente sind über ein Kommunikationssystem 18 zum Daten- und Informationsaustausch miteinander verbunden. Der Eingangsschaltung 12 sind Eingangsleitungen 20 von einer Meßeinrichtung 22 zur Erfassung der Fahrgeschwindigkeit, eine Eingangsleitung 24 von einem vom Fahrer betätigbaren Bedienelement 26 zur Vorgabe des Betriebszustandes des Fahrgeschwindigkeitsreglers und des Sollabstandes, und eine Ausgangsleitung 28 von einer Abstandsmeßeinrichtung 30, vorzugsweise einem Radargerät zugeführt. Über eine Eingangsleitung 48 wird eine die Drehzahl der Antriebseinheit 42 repräsentierende Größe der Eingangsschaltung 12 und über die Leitung 52 ein Kupplungsbetätigungssignal zugeführt. Ferner werden der Eingangsschaltung 12 weitere Eingangsleitungen 32 bis 34 von Meßeinrichtungen 36 bis 38 zur Erfassung weiterer Betriebsgrößen des Fahrzeugs, die bei der adaptiven Fahrgeschwindigkeitsregelung Verwendung finden, zugeführt. Derartige Betriebsgrößen sind beispielsweise Lenkwinkel, Querbeschleunigung, etc. Die Steuereinheit 10, dort der wenigstens eine Mikrocomputer 14 beeinflußt im Rahmen der adaptiven Fahrgeschwindigkeitsregelung über wenigstens eine Ausgangsleitung 40 und entsprechende Stelleinrichtungen 42 (z. B. elektronisches Motorsteuergerät) die Leistung der Antriebseinheit des Fahrzeugs. Ferner beeinflußt die Steuereinheit 10 in einem bevorzugten Ausführungsbeispiel über die Ausgangsleitung 44 und entsprechende Stellelemente 46 (z. B. einer Bremsanlage mit ABS/ASR-Elementen) die Bremskraft an den Radbremsen des Fahrzeugs.

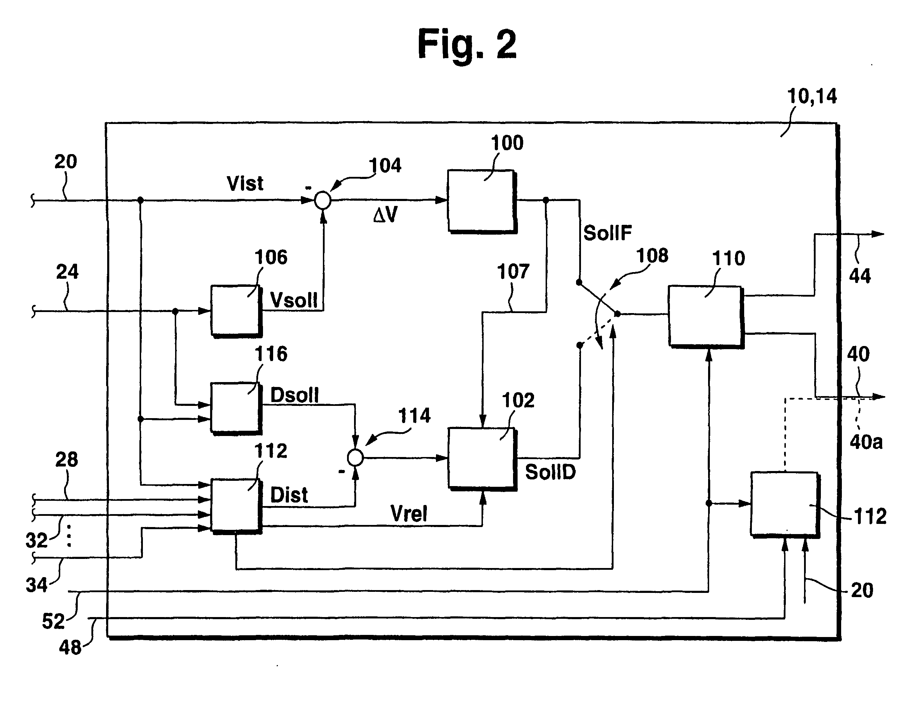

Das aus dem eingangs genannten Stand der Technik bekannte Grundprinzip der adaptiven Fahrgeschwindigkeitsregelung ist in Figur 2 anhand eines Ablaufdiagramms dargelegt, welches die grundsätzlichen Zusammenhänge bei der adaptiven Fahrgeschwindigkeitsregelung darstellt. Die Realisierung der Fahrgeschwindigkeitsregelung erfolgt im bevorzugten Ausführungsbeispiel als ein Programm des Mikrocomputers 14, durch welche die in Figur 2 dargestellten Zusammenhänge realisiert werden.

Der dargestellte adaptive Fahrgeschwindigkeitsregler weist zwei Grundfunktionen auf, den Fahrgeschwindigkeitsregler 100 und den Abstandsregler 102. Dem in herkömmlicher Weise realisierten Fahrgeschwindigkeitsregler 100 wird von einer Vergleichsstelle 104 die Differenz ΔV zwischen der Sollgeschwindigkeit Vₛₒₗₗ und der Istgeschwindigkeit Vᵢₛₜ zugeführt. Die Sollgeschwindigkeit Vₛₒₗₗ wird dabei abhängig von dem Betätigungszustand des Bedienelements 21 in einer Auswahlstufe 106 bestimmt. So wird beispielsweise im Betriebszustand Setzen der aktuelle Istgeschwindigkeitswert als Sollgeschwindigkeit übernommen, im Betriebszustand Beschleunigen zeitlich veränderliche Rampen der Sollgeschwindigkeit vorgegeben, etc. Das vom Fahrgeschwindigkeitsregler 100 in Abhängigkeit der Geschwindigkeitsdifferenz nach Maßgabe einer vorgegebenen Regelstrategie (z.B. PD-Regelung) gebildete Ausgangssignal SollF wird an ein Schaltelement 108 und über die Leitung 107 an den Regler 102 abgegeben. Dieses leitet je nach Schaltstellung das Ausgangssignal SollF des Fahrgeschwindigkeitsreglers oder das Ausgangssignal SollD des Abstandsreglers an eine Auswahlstufe 110. Diese bildet abhängig vom zugeführten Ausgangssignal ein Steuersignal zur Beeinflussung der Motorleistung (Ausgangsleitung 40) oder der Bremskraft (Ausgangsleitung 44). Die Abstandsregelung umfaßt eine Auswahlstufe 112, die in Abhängigkeit des über die Eingangsleitung 28 zugeführten Radarsignale, der Istgeschwindigkeit und weiter über die Leitung 32 bis 34 zugeführte Größen, wie z. B. Lenkwinkel, Gierrate, Beschleunigung des Fahrzeugs das relevante Fahrzeug, welches als Frontfahrzeug zur Abstandsregelung zu verwenden ist, ermittelt. Dabei wird der zu erwartende Kurs des Fahrzeugs anhand der Geschwindigkeit und des Lenkwinkels und/oder der Gierrate bestimmt. Der Radarsensor liefert den Abstand zu den erfaßten Objekte, deren relative Geschwindigkeit und den Winkel zu den verschiedenen Objekten, so daß aus einem Vergleich der gelieferten Daten mit dem zu erwartenden zukünftigen Kurs des Fahrzeugs das relevante Fahrzeug ausgewählt wird. Dann werden die vom Radarsensor ermittelten Werte für den Abstand zum relevanten Fahrzeug Dᵢₛₜ und dessen Relativgeschwindigkeit Vᵣₑₗ ausgegeben. Der Istabstand wird dabei einer Vergleichsstufe 114 zugeführt, in der die Differenz zwischen dem vom Fahrer vorgegebenen Sollabstand Dₛₒₗₗ und dem ermittelten Istabstand gebildet und dem Abstandsregler 102 zugeführt wird. Diesem wird ferner von der Auswahlstufe 112 die Relativgeschwindigkeit übermittelt. Der Sollabstand zum relevanten vorausfahrenden Fahrzeug wird in einer Auswahlstufe 116 in Abhängigkeit eines Betätigungssignals des Fahrers, welche den Sollzeitabstand zum vorausfahrenden Fahrzeug in Sekunden festlegt, und der Istgeschwindigkeit ermittelt. Der Abstandsregler 102 bildet ein Ausgangssignal SollD, mit welchem sowohl die Abstandsdifferenz als auch die relative Geschwindigkeit des vorausfahrenden Fahrzeugs gegen 0 geführt wird. Das Ausgangssignal SollD wird dem Schaltelement 108 zugeführt. Dieses wird in die strichliert gezeichnete Stellung umgeschaltet, wenn ein vorausfahrendes Fahrzeug erkannt wurde, zu dem der Abstand einzustellen ist. Dies bedeutet, daß der Fahrgeschwindigkeitsregler 100 gemäß seinen Eingangsgrößen Motorleistung und Bremsleistung bestimmt, wenn kein Fahrzeug zur Abstandsregelung ermittelt wurde, während bei erkanntem vorausfahrendem Fahrzeug der Abstandsregler 102 Motorleistung und Bremsleistung steuert. Die Auswahlstufe 110 entscheidet abhängig vom zugeführten Sollwert, der im wesentlichen einer Sollbeschleunigung bzw. Verzögerung entspricht, ob die Motorsteuerung oder die Bremsensteuerung aktiviert wird. Reicht eine Reduktion der Motorleistung zum Einhalten der Sollverzögerung nicht aus, so werden die Bremsen aktiviert, andernfalls wird die Verzögerungssteuerung über eine Steuerung der Motorleistung durchgeführt.

Um Kraftflußunterbrechungen, insbesondere beim Gangwechsel bei nicht automatisierten Getrieben, im Zusammenhang mit Reglern zur Steuerung der Geschwindigkeit zufriedenstellend zu beherrschen, ist vorgesehen, daß bei einer über das Betätigungssignal über die Leitung 52 zugeführten Information über die Kraftflußunterbrechung, z.B. über die Betätigung einer Kupplung, der Regler nicht deaktiviert wird. Vielmehr wird die Funktion nur unterbrochen oder in einem bevorzugten Ausführungsbeispiel ausschließlich auf den Bremseneingriff reduziert. Dies bedeutet, daß die Berechnungen der Sollwerte wie oben dargestellt auch bei unterbrochenem Kraftfluß, d.h. bei betätigter Kupplung stattfinden und lediglich die Ausgabe der Sollwerte an die Motorsteuerung und in einem Ausführungsbeispiel an die Bremsensteuerung nicht durchgeführt wird. Im bevorzugten Ausführungsbeispiel nach Figur 2 wird ein Kupplungsbetätigungssignal über die Leitung 52 der Auswahlstufe 110 zugeführt, welche die Ausgabe der Sollwerte bzw. nur des Sollwertes für die Antriebseinheit 42 unterbindet, wenn und solange eine Betätigung der Kupplung erkannt wurde.

Als eine Alternative zum Kupplungsbetätigungssignal wird ein z.B. aus Drehzahl und Fahrgeschwindigkeit gebildete Information über den unterbrochenen Kraftfluß zwischen Antriebeinheit und Antriebsrädern in der Steuereinheit 10 gebildet und entsprechend verarbeitet. Im folgenden wird im bevorzugten Ausführungsbeispiel die Unterbrechung des Kraftflusses durch Kupplungsbetätigung betrachtet. Bei einer anderen Ursache für die Unterbrechung des Kraftflusses (z.B. Schalten des Getriebes in eine Neutralstellung) ist die Vorgehensweise entsprechend.

Beim Wiederherstellen des Kraftflusses durch Wiedereinkuppeln wird die Regelung auf möglichst weiche Art und Weise fortgesetzt. Dazu wird während des unterbrochenen Kraftflusses eine geeignete Anpassung der Antriebseinheit vorgenommen. In einem bevorzugten Ausführungsbeispiel wird vor der Kupplungsbetätigung auf der Basis von Motordrehzahl, der aktuell eingelegten Gangstufe (beispielsweise ermittelt aus Motordrehzahl und Fahrzeuggeschwindigkeitoder über einen geeigneten Sensor) und/oder einer Lastanforderung (beispielsweise abgeleitet aus der Fahrpedalstellung) eine Abschätzung über den wahrscheinlichen neuen Gang durchgeführt. Dies erfolgt in der Prädiktionsstufe 108. Für diese Abschätzung können beispielhaft die folgenden Regeln herangezogen werden. Ist die Drehzahl bei Beginn der Kupplungsbetätigung hoch (zum Beispiel größer 3000 Umdr./min), so ist ein Schalten in einen höheren Gang wahrscheinlich. Wird die Kupplung im höchsten Gang (z.B. 5.) betätigt, so ist der zweithöchste (z.B. 4.) wahrscheinlich. Ist die Drehzahl niedrig und die Lastanforderung klein, so ist der nächstniedrige wahrscheinlich. Sollte keine dieser Regeln zur Anwendung kommen oder mehrere Regeln widersprüchlich sein, so kann für die weitere Behandlung der bisherige Gang als Arbeitsprothese vorgegeben werden. Mit der Aussage über den wahrscheinlichen neuen Gang läßt sich bei gegebener Fahrgeschwindigkeit die Motordrehzahl abschätzen, die nach dem Einkuppeln vorliegen wird. Diese Motordrehzahl wird dann als Solldrehzahl über die Leitung 40a an den Motor abgegeben. Auf diese Drehzahl wird während der Kupplungsbetätigung gezielt geregelt.

Eine Randbedingung der Drehzahlregelung ist , daß nur geringe Momente zur Drehzahlregelung angewendet werden dürfen. Dies deshalb, weil beim Einkuppeln mit dem dann startenden Kraftfluß zu den Rädern möglichst kein Ruck entstehen darf, der den Fahrkomfort erheblich beeinträchtigen würde. Sind die Verlustmomente des Motors durch innere Reibung sowie durch angekuppelte Nebenaggregate bekannt, kann die Momentenänderung bei der Drehzahlregelung auf geringe Werte begrenzt werden, so daß sich die Antriebseinheit in eine Art Schwebezustand befindet.

In diesem Zusammenhang hat es sich in einem Ausführungsbeispiel gezeigt, daß eine Begrenzung der Solldrehzahländerung sinnvoll ist, damit keine den Komfort störende Drehzahlsprünge auftreten.

Liegt vom Regler keine Anforderung für ein positives Antriebsmoment vor, d.h. wünscht der Regler eine Bremsung durch die Antriebseinheit oder über die Bremsanlage, so wird in einem bevorzugten Ausführungsbeispiel auf die Drehzahlregelung verzichtet und unabhängig von der Gangprädiktion die Drehzahl auf die Leerlaufdrehzahl abgesenkt. In diesem Fall wird der Bremswirkung gegenüber der Komfortverbesserung Vorrang eingeräumt.

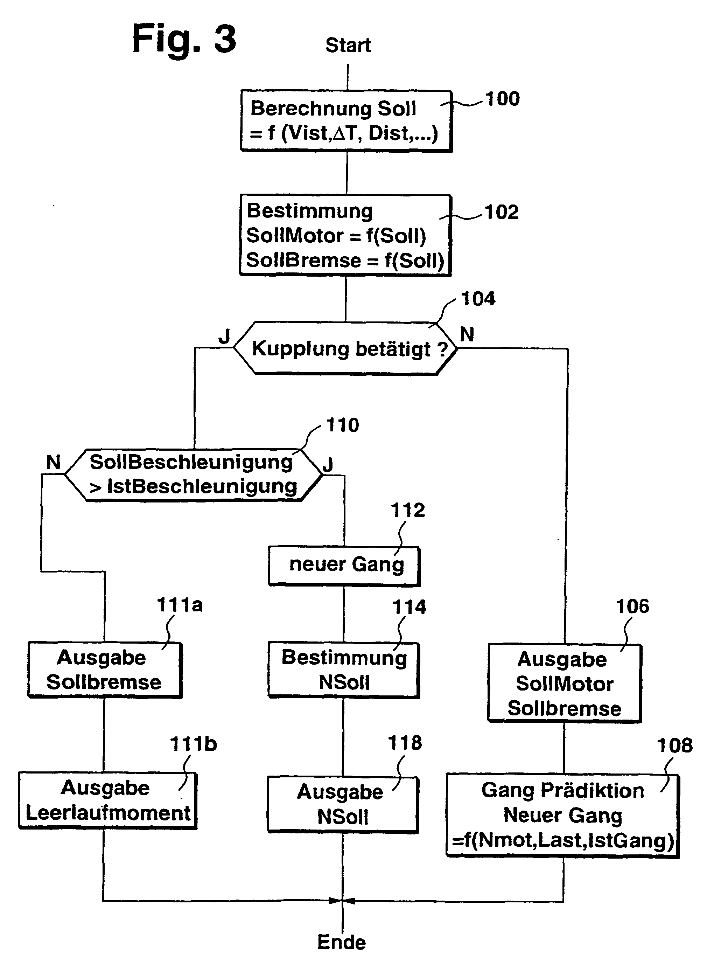

Die Realisierung der erfindungsgemäßen Lösung ist in einem bevorzugten Ausführungsbeispiel im Flußdiagramm nach Figur 3 dargestellt.

Dieses Programm wird mit Aktivieren des Fahrgeschwindigkeitsreglers gestartet. Im ersten Schritt 100 werden in der bekannten Weise die jeweiligen Sollwerte (Sollbeschleunigung) abhängig von der Fahrzeuggeschwindigkeit, von der Sollgeschwindigkeit, vom vorgegebenen Zeitabstand, von Abstand zu einem vorausfahrenden Fahrzeug, etc. bestimmt und einer ausgewählt (SOLL). Dieser wird im nächsten Schritt 102 auf einen Sollwert für die Antriebseinheit (SOLLMOTOR) und einen Sollwert für die Bremsanlage (SOLLBREMSE) aufgeteilt. Die hierbei verfolgte Strategie ist an einem Beispiel oben beschrieben. Anhand des Kupplungsbetätigungssignals wird dann im Schritt 104 überprüft, ob die Kupplung betätigt ist. Ist dies nicht der Fall, werden die Sollwerte SOLLMOTOR bzw. SOLLBREMSE an die jeweiligen Steuereinheiten für die Antriebseinheit und/oder die Bremsanlage ausgegeben (Schritt 106). Daraufhin wird im nächsten Schritt 108 die Prädiktion des neuen Ganges auf der Basis von Motordrehzahl Nmot, dem aktuellen Gang ISTGANG, der Lastanforderung LAST, etc. bestimmt. Die hierbei verfolgte Strategie ist oben beschrieben und wird hier entsprechend angewendet. Nach Schritt 108 wird das Programm beendet und zum nächsten Zeitintervall erneut durchlaufen.

Hat Schritt 104 ergeben, daß die Kupplung betätigt ist, wird im Schritt 110 abgefragt, ob die von den Reglern berechnete Sollbeschleunigung des Fahrzeugs (siehe Schritt 100) größer als die Istbeschleunigung des Fahrzeugs ist, d.h. ob ein positives Motormoment angefordert ist. Ist dies nicht der Fall, wird gemäß Schritt 111a und 11b in einem Ausführungsbeispiel der Sollwert SOLLBREMSE für die Bremsanlage ausgegeben, während für den Motor das Leerlaufmoment ausgegeben wird. In einem anderen Ausführungsbeispiel der Sollwert SOLLBREMSE nicht ausgegeben, d.h. die Regelung unterbrochen. Danach wird das Programm beendet und zu gegebener Zeit wirderholt. Hat Schritt 110 ergeben, daß die Istbeschleunigung kleiner als die Sollbeschleunigung ist, wird im Schritt 112 wird der im Schritt 108 als wahrscheinlich angenommene neue Gang eingelesen und im darauffolgenden Schritt 114 der Drehzahlsollwert Nsoll auf der Basis dieses neuen Ganges sowie der aktuellen Fahrgeschwindigkeit berechnet. Danach wird gemäß Schritt 118 der Drehzahlsollwert Nsoll zur Einregelung an die Motorsteuerung ausgegeben bzw. im Rahmen eines Drehzahlregelkreises eingeregelt. Nach Schritt 118 wird das Programm beendet und zum nächsten Zeitintervall wieder eingeleitet.

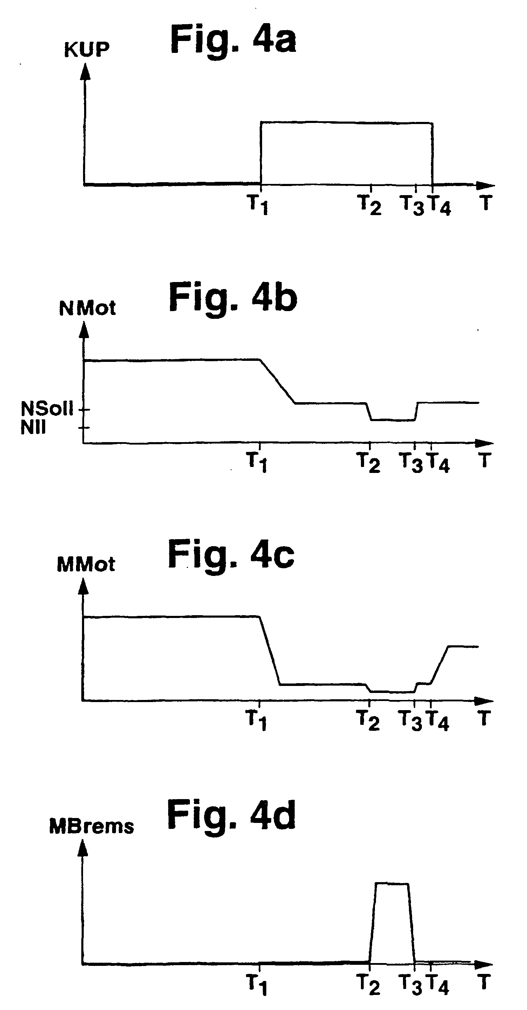

Figur 4 zeigt Zeitdiagramme, welche die dargestellte Vorgehensweise anhand einer beispielhaften Fahrsituation darstellt. In Figur 4a ist dabei das Kupplungsbetätigungssignal KUP über der Zeit aufgetragen, in Figur 4b die Motordrehzahl Nmot, in Figur 4c das von der Antriebseinheit bereitgestellte Motormoment Mmot und in Figur 4d das von der Bremsanlage an die Radbremsen aufgebrachte Bremsmoment Mbrems. Zunächst fahre das Fahrzeug unter der Wirkung eines der Regler in einem stationären Betriebszustand. Entsprechend ist bis zu einem Zeitpunkt T1 die Motordrehzahl Nmot sowie das von der Antriebseinheit bereitgestellte Motormoment Mmot auf einem bestimmten Wert (vgl. Figuren 4b und 4c). Das Bremsmoment ist Null, da kein Eingriff in die Bremsanlage erfolgt (siehe Figur 4d). Zum Zeitpunkt T1 betätigt der Fahrer beispielsweise zum Zwecke des Gangwechsels die Kupplung (siehe Signaländerung in Figur 4a). Dies bedeutet, daß mit Hilfe des unmittelbar vor dem Zeitpunkt T1 vorhergesagten Gangs eine Solldrehzahl Nsoll ermittelt wird, welche in der Phase der Kraftflußunterbrechung (Tl bis T4) eingeregelt wird. Eine entsprechende Änderung ist beispielhaft in Figur 4b eingetragen, wobei die Motordrehzahl abgesenkt wird. Die vorstehend beschriebene Strategie hat demnach ergeben, daß ein Wechsel in einen höheren Gang wahrscheinlich ist. Da der Kraftschluß unterbrochen ist, sinkt das bereitgestellte Motormoment zum Zeitpunkt T1 auf Werte im Bereich des Verlustmoments (vgl. Figur 4c). Zum Zeitpunkt T2 trete eine Situation auf, in der das Fahrzeug stark verzögert werden muß, beispielsweise durch ein vorausfahrendes Fahrzeug. Entsprechend findet zum Zeitpunkt T2 ein Bremsmomentenaufbau statt (siehe Figur 4d). Diese Situation sei zum Zeitpunkt T3 vorüber, so daß zu diesem Zeitpunkt das Motorbremsmoment wieder abgebaut ist. Da der Kraftfluß zwischen Antriebseinheit und Antriebsräder unterbrochen ist, wird die Motordrehzahl und das Motormoment entsprechend der Darstellung in Figur 4b und 4c auf die Leerlaufwerte abgesenkt (NLL Leerlaufdrehzahl). Zum Zeitpunkt T4 läßt der Fahrer die Kupplung los, kuppelt also ein (siehe Figur 4a). Da in der dargestellten Situation die Prädiktion der Solldrehzahl korrekt war, wird die Solldrehzahl nahezu unverändert ab dem Zeitpunkt T4 bei geschlossenem Kraftschluß beibehalten (siehe Figur 4b), während das Motormoment auf einen für die entsprechende Betriebssituation geltenden stationären Wert erhöht wird (vgl. Figur 4c).

Neben der Anwendung auf einen adaptiven Fahrgeschwindigkeitsregler wird die beschriebene Vorgehensweise entsprechend auch auf einen herkömmlichen Fahrgeschwindigkeitsregler ohne Abstandssensierung angewendet, wobei die eingangs genannten Vorteile erreicht werden.

Anstelle des vorstehend verwendeten Begriffs Gang ist allgemein das Übersetzungsverhältnis bzw. die Übersetzung im Triebstrang zwischen Antriebseinheit und Antriebsrädern zu verstehen.

## Patentansprüche

1. Verfahren zur Steuerung der Geschwindigkeit eines Fahrzeugs, wobei die Fahrzeuggeschwindigkeit im Rahmen einer Regelung eines Istwertes auf einen vorgegebenen Sollwert gesteuert wird, wobei bei dieser Regelung der Abstand zu einen vorausfahrenden Fahrzeug berücksichtigt wird, wobei bei Unterbrechen des Kraftflusses zwischen der Antriebseinheit des Fahrzeugs und den Antriebsrädern die Regelung teilweise wirkungslos wird und die Regelung nach Wiederherstellen des Kraftflusses automatisch wieder wirksam geschaltet wird, **dadurch gekennzeichnet, dass** bei unterbrochenem Kraftfluss die Regelung nur in die Bremsanlage des Fahrzeugs eingreift, der Eingriff der Regelung in die Antriebseinheit des Fahrzeugs jedoch nicht wirksam ist.

2. Verfahren nach Anspruch 1, **dadurch gekennzeichnet, daß** die Regelung eine Regelung der Istgeschwindigkeit des Fahrzeugs auf einen vorgegebenen Sollgeschwindigkeitswert und/oder eine Regelung des Abstandes zu einem vorausfahrenden Fahrzeug auf einen vorgegebenen Sollwert ist.

3. Verfahren nach einem der vorhergehenden Ansprüche, **dadurch gekennzeichnet, daß** die Regelung bei Unterbrechen des Kraftflusses teilweise wirkungslos wird, wobei die weiterhin ermittelten Steuersignale der Regelung nur zum Teil nach außen wirken.

4. Verfahren nach einem der vorhergehenden Ansprüche, **dadurch gekennzeichnet, daß** bei unterbrochenem Kraftfluß die Übersetzung im Triebstrang vorhergesagt wird, die bei Wiederherstellen des Kraftflusses voraussichtlich vorliegt.

5. Verfahren nach einem der vorhergehenden Ansprüche, **dadurch gekennzeichnet, daß** während des unterbrochenen Kraftflusses die Drehzahl der Antriebseinheit auf eine Drehzahl geregelt wird, die der bei Wiederherstellen des Kraftflusses voraussichtlich eingelegten Übersetzung entspricht.

6. Verfahren nach einem der vorhergehenden Ansprüche, **dadurch gekennzeichnet, daß** die Regelung ein adaptiver Fahrgeschwindigkeitsregler ist.

7. Verfahren nach Anspruch 5, **dadurch gekennzeichnet, daß** die Änderung der Solldrehzahl begrenzt ist.

8. Verfahren nach Anspruch 5 oder 7, **dadurch gekennzeichnet, daß** die Drehzahlregelung unterlassen wird, wenn von der Regelung kein positives Moment der Antriebseinheit angefordert wird.

9. Vorrichtung zur Steuerung der Geschwindigkeit eines Fahrzeugs, mit einem Regler, der die Geschwindigkeit im Rahmen einer Regelung eines Istwertes auf einen vorgegebenen Sollwert unter Berücksichtigung des Abstandes zu einem vorausfahrenden Fahrzeug steuert, mit Erkennungsmitteln, die feststellen, ob der Kraftfluss zwischen Antriebseinheit und Antriebsrädern unterbrochen ist, mit Mitteln, die den Regler zumindest teilweise wirkungslos schalten, wenn ein unterbrochener Kraftfluss erkannt wurde, mit Erkennungsmittel, die ein Wiederherstellen des Kraftflusses erkennen und die bei Wiederherstellen des Kraftflusses den Regler automatisch wieder wirksam schalten, **dadurch gekennzeichnet, dass** ferner Steuermittel vorgesehen sind, die bei unterbrochenem Kraftfluss die Regelung derart beeinflussen, dass die Regelung nur in die Bremsanlage des Fahrzeugs eingreift, der Eingriff in die Antriebseinheit des Fahrzeugs durch die Regelung jedoch nicht wirksam ist.

## Claims

1. Method for controlling the speed of a vehicle, with the speed of the vehicle being controlled within the scope of an adjustment of an actual value to a predefined setpoint value, wherein the distance from a vehicle travelling in front is taken into account in this adjustment, wherein when the force flux between the drive unit of the vehicle and the driven wheels is interrupted the adjustment means is partially deactivated and the adjustment means is automatically activated again after the force flux has been restored, **characterized in that** when the force flux is interrupted the adjustment means engages only in the brake system of the vehicle but the engagement of the adjustment means in the drive unit of the vehicle is inactive.

2. Method according to Claim 1, **characterized in that** the adjustment is an adjustment of the actual speed of the vehicle to a predefined setpoint speed value and/or an adjustment of the distance from a vehicle travelling in front to a predefined setpoint value.

3. Method according to one of the preceding claims, **characterized in that** the adjustment means becomes partially inactive when the force flux is interrupted, wherein the control signals of the adjustment means which continue to be determined are only partially active externally.

4. Method according to one of the preceding claims, **characterized in that** when the force flux is interrupted the transmission ratio which is anticipated to be present when the force flux is restored is predicted in the drive train.

5. Method according to one of the preceding claims, **characterized in that** while the force flux is interrupted the rotational speed of the drive unit is adjusted to a rotational speed which is anticipated to correspond to the selected transmission ratio when the force flux is restored.

6. Method according to one of the preceding claims, **characterized in that** the adjustment means is an adaptive cruise controller.

7. Method according to Claim 5, **characterized in that** the change in the setpoint rotational speed is limited.

8. Method according to Claim 5 or 7, **characterized in that** the rotational speed is not adjusted if a positive torque of the drive unit is not requested by the adjustment means.

9. Device for controlling the speed of a vehicle, having an adjustment means which controls the speed within the scope of an adjustment of an actual value to a predefined setpoint value taking into account the distance from a vehicle travelling in front, having detection means which detect whether the force flux between the drive unit and driven wheels is interrupted, having means which at least partially deactivate the adjustment means if an interrupted force flux has been detected, having detection means which detect that the force flux has been restored and which automatically reactivate the adjustment means when the force flux has been restored, **characterized in that** in addition control means are provided which, when the force flux has been interrupted, influence the adjustment means in such a way that the adjustment means engages only in the brake system of the vehicle but the engagement in the drive unit of the vehicle by the adjustment means is inactive.

## Revendications

1. Procédé de commande de la vitesse d'un véhicule selon lequel on commande la vitesse du véhicule dans le cadre d'une régulation de la valeur réelle sur une valeur de consigne prédéfinie, cette régulation tenant compte de la distance par rapport au véhicule précédent,
et en cas de coupure de la transmission de force entre l'unité motrice du véhicule et les roues motrices, la régulation est en partie neutralisée et après rétablissement de la transmission de la force, la régulation est réactivée automatiquement,
**caractérisé en ce que**
lorsque la transmission de la force est interrompue, la régulation n'intervient que sur le système de frein du véhicule alors que l'intervention de la régulation sur l'unité motrice du véhicule n'est pas activée.

2. Procédé selon la revendication 1,
**caractérisé en ce que**
la régulation est une régulation de vitesse réelle du véhicule sur une vitesse de consigne prédéfinie et/ou une régulation de la distance par rapport au véhicule qui précède sur une valeur de consigne prédéfinie.

3. Procédé selon l'une des revendications précédentes,
**caractérisé en ce qu'**
en cas d'interruption de la transmission de force, la régulation est partiellement neutralisée et les signaux de commande déterminés de la régulation ne continuent d'agir que partiellement vers l'extérieur.

4. Procédé selon l'une des revendications précédentes,
**caractérisé en ce qu'**
en cas d'interruption de la transmission de force, on prédicte comme la démultiplication de la ligne de transmission, celle qui existe de manière prévisionnelle lors du rétablissement de la transmission de force.

5. Procédé selon l'une des revendications précédentes,
**caractérisé en ce que**
pendant l'interruption de la transmission de force, la vitesse de rotation de l'unité motrice est régulée sur une vitesse de rotation qui correspond à la démultiplication qui sera utilisée probablement lors du rétablissement de la transmission de force.

6. Procédé selon l'une quelconque des revendications précédentes,
**caractérisé en ce que**
la régulation est un régulateur de vitesse de déplacement, adaptatif.

7. Procédé selon la revendication 5,
**caractérisé en ce que**
la variation de la vitesse de rotation de consigne est limitée.

8. Procédé selon les revendications 5 ou 7,
**caractérisé en ce que**
la régulation de la vitesse de rotation n'est pas exécutée si la régulation ne demande pas de couple positif à l'unité motrice.

9. Dispositif de commande de la vitesse d'un véhicule comprenant un régulateur qui commande la vitesse dans le cas d'une régulation d'une valeur réelle sur une valeur de consigne prédéfinie en tenant compte de la distance par rapport à un véhicule qui précède, comportant des moyens de détection qui déterminent si le flux de force entre l'unité motrice et les roues motrices est coupé, des moyens qui neutralisent au moins en partie le régulateur si un flux de force coupé a été détecté, les moyens de détection qui détectent un rétablissement du flux de force et activent de nouveau automatiquement le régulateur lors du rétablissement de flux de force,
**caractérisé en ce qu'**
il comporte en outre des moyens de commande qui, lorsque le flux de force est interrompu, influencent la régulation de façon que celle-ci n'agisse que sur le système de frein du véhicule mais que l'intervention sur l'unité motrice du véhicule n'est toutefois pas activée par la régulation.
